(19) Europäisches Patentamt

European Patent Office

Office européen des brevets

(11) **EP 1 158 540 A1**

(12) **EUROPEAN PATENT APPLICATION**

(43) Date of publication:
**28.11.2001 Bulletin 2001/48**

(51) Int Cl.$^7$: **G21K 4/00**, C09K 11/85

(21) Application number: **00201857.0**

(22) Date of filing: **24.05.2000**

| | |
|---|---|
| (84) Designated Contracting States: **AT BE CH CY DE DK ES FI FR GB GR IE IT LI LU MC NL PT SE** Designated Extension States: **AL LT LV MK RO SI** | (71) Applicant: **AGFA-GEVAERT N.V. 2640 Mortsel (BE)** (72) Inventor: **The designation of the inventor has not yet been filed** |

(54) **A binderless storage phosphor screen with needle shaped crystals**

(57)    A binderless storage phosphor screen with needle shaped crystals, wherein the phosphor is an alkalihalide phosphor and the needles show high [100] unit cell orientation in the plane of the screen.

FIG 1

Printed by Jouve, 75001 PARIS (FR)

**Description**

FIELD OF THE INVENTION

The present invention relates to a binderless storage phosphor screen with needle shaped phosphors.

BACKGROUND OF THE INVENTION

A well known use of storage phosphors is in the production of X-ray images. **In US-A 3 859 527** a method for producing X-ray images with a photostimulable phosphor, which being incorporated in a panel is disclosed. The panel is exposed to incident pattern-wise modulated X-ray beam and as a result thereof the phosphor temporarily stores energy contained in the X-ray radiation pattern. At some interval after the exposure, a beam of visible or infra-red light scans the panel to stimulate the release of stored energy as light that is detected and converted to sequential electrical signals which are can be processed to produce a visible image. For this purpose, the phosphor should store as much as possible of the incident X-ray energy and emit as little as possible of the stored energy until stimulated by the scanning beam. This is called "digital radiography" or "computed radiography".

The image quality that is produced by any radiographic system using phosphor screen thus also in a digital radiographic system, depends largely on the construction of the phosphor screen. Generally, the thinner a phosphor screen at a given amount of absorption of X-rays, the better the image quality will be. This means that the lower the ratio of binder to phosphor of a phosphor screen, the better the image quality, attainable with that screen, will be. Optimum sharpness can thus be obtained when screens without any binder are used. Such screens can be produced, e.g., by physical vapour deposition, which may be thermal vapour deposition, sputtering, electron beam deposition or other of phosphor material on a substrate. However, this production method can not be used to produce high quality screens with every arbitrary phosphor available. The mentioned production method leads to the best results when phosphor crystals with high crystal symmetry and simple chemical composition are used.

The use of alkali metal halide phosphors in storage screens or panels is well known in the art of storage phosphor radiology and the high crystal symmetry of these phosphors makes it possible to provide structured screens and binderless screens.

It has been disclosed that when binderless screens with an alkali halide phosphors are produced it is beneficial to have the phosphor crystal deposited as some kind of piles, needles, tiles, etc. In, e.g., **US-A-4 769 549** it is disclosed that the image quality of a binderless phosphor screen can be improved when the phosphor layer has a block structure shaped in fine pillars. In e.g. US-A-5 055 681 a storage phosphor screen comprising an alkali halide phosphor in a pile-like structure is disclosed. The image quality of such screens needs still to be increased and in **JP-A-06/230 198** it is disclosed that the surface of the screen with pillar like phosphors is rough and that a levelling of that surface can increase the sharpness. In **US-A 5 874 744** the attention is drawn to the index of refractivity of the phosphor used to produce the storage phosphor screen with needle-like of pillar-like phosphor.

Although all screens disclosed in this prior art can yield X-ray images with good quality, the need for a better compromise between speed of the recording system (i.e. as low as possible patient dose) with an image with high sharpness and low noise is still there.

OBJECTS AND SUMMARY OF THE INVENTION

It is an object of the invention to provide a stimulable phosphor screen useful in an X-ray recording system with a very good compromise between speed of the recording system (i.e. as low as possible patient dose) with an image with high sharpness and low noise.

The above mentioned object is realised by providing a stimulable phosphor screen having the specific features defined in claim 1. Specific features for preferred embodiments of the invention are disclosed in the dependent claims.

Further advantages and embodiments of the present invention will become apparent from the following description and drawings.

0BRIEF DESCRIPTION OF THE DRAWINGS

Figure 1 shows a SEM photograph of a phosphor screen with needle-shaped phosphor.

Figure 2 shows an XRD-spectrum of a screen with a comparative needle-shaped phosphor.

Figures 3 - 6 show XRD spectra of screens with invention needle-shaped phosphors.

DETAILED DESCRIPTION OF THE INVENTION

It has now been found that it is possible to improve a binderless phosphor screen comprising an alkali halide phosphor by producing it in such a manner that the phosphor is present on the support as needle-like crystals having a specific crystal orientation. It has been found that, when a phosphor screen showing high [100] unit cell orientation in the plane of the screen was produced, that such a screen shows a better compromise between speed and sharpness. The phosphor screens showing high (100) unit cell orientation in the plane of said screen are characterised by an XRD-spectrum wherein the intensity of the (100) diffraction line is at least equal to the intensity of the (110) diffraction line, when said XRD-spectrum is measured by positioning an X-ray source and an X-ray diffraction intensity detector at equal but varying angles with respect to the normal to said screen. Preferably the intensity of the (100) diffraction line is at least 5 times higher than the intensity of the (110) diffraction line and most preferably the intensity of the (100) diffraction line is at least 5 times higher than the intensity of the (110) diffraction line.

To realise such a crystal orientation on the screen the binderless phosphor layer is applied to the support a by method selected from the group consisting of physical vapour deposition, thermal vapour deposition, chemical vapour deposition, electron beam deposition, radio frequency deposition and pulsed laser deposition. In fact any of the methods above for preparing the binderless phosphor screen is suitable as long as the parameters of the method can be adjusted so that the requirements of the crystallinity of the phosphor needles as described herein above are met. Preferably the binderless phosphor screen is prepared by vacuum deposition under an inert gas atmosphere. It was found that by adjusting the temperature of the substrate and the pressure of the inert gas during vacuum deposition, the crystal orientation of the needles could be adjusted to the desired level. When preparing a screen by vacuum deposition under an inert gas atmosphere it is preferred to keep said substrate at a temperature $T \geq 90\ °C$ and under an Ar-pressure of at most 3 Pa. In a more preferred embodiment the Ar-pressure is kept between 0.20 and 2.00 Pa and the temperature is adjusted so that the product between temperature and Ar-pressure is between 20 and 350.

A binderless phosphor screen according to this invention can be prepared by vacuum deposition of the phosphor crystals on the substrate as well as by mixing the ingredients for the phosphor and then evaporating this mixture so as to have the phosphor formed in situ during evaporation.

The phosphor in a binderless phosphor screen according to this invention can be any alkali metal phosphor known in the art. Suitable phosphors are, e.g., phosphors according to formula I :

$$M^{1+}X.aM^{2+}X'_2BM^{3+}X''_3:cZ$$

wherein: $M^{1+}$ is at least one member selected from the group consisting of Li, Na, K, Cs and Rb,

$M^{2+}$ is at least one member selected from the group consisting of Be, Mg, Ca, Sr, Ba, Zn, Cd, Cu, Pb and Ni,

$M^{3+}$ is at least one member selected from the group consisting of Sc, Y, La, Ce, Pr, Nd, Pm, Sm, Eu, Gd, Tb, Dy, Ho, Er, Tm, Yb, Lu, Al, Bi, In and Ga,

Z is at least one member selected from the group $Ga^{1+}$, $Ge^{2+}$, $Sn^{2+}$, $Sb^{3+}$ and $As^{3+}$, X, X' and X'' can be the same or different and each represents a halogen atom selected from the group consisting of F, Br, Cl, I and $0 \leq a \leq 1$, $0 \leq b \leq 1$ and $0 < c \leq 0.2$. Such phosphors have been disclosed in, e.g., US-A-5 736 069.

Highly preferred phosphors for use in a binderless phosphor screen of this invention are CsX:Eu stimulable phosphors, wherein X represents a halide selected from the group consisting of Br and Cl prepared by a method comprising the steps of :

- mixing said CsX with between $10^{-3}$ and 5 mol % of an Europium compound selected from the group consisting of $EuX'_2$, $EuX'_3$ and EuOX', X' being a member selected from the group consisting of F, Cl, Br and I,
- firing said mixture at a temperature above 450 °C
- cooling said mixture and
- recovering the CsX:Eu phosphor.

Most preferably a CsBr:Eu stimulable phosphor, is used prepared by a method comprising the steps of :

- mixing said CsX with between $10^{-3}$ and 5 mol % of an Europium compound selected from the group consisting of $EuX'_2$, $EuX'_3$ and EuOX', X' being a member selected from the group consisting of F, Cl, Br and I,
- firing said mixture at a temperature above 450 °C
- cooling said mixture and
- recovering the CsX:Eu phosphor.

The binderless screen can be prepared by bringing the finished phosphor on the support by any method selected from the group consisting of physical vapour deposition, thermal vapour deposition, chemical vapour deposition, electron beam deposition, radio frequency deposition and pulsed laser deposition. It is also possible to bring the alkali metal halide and the dopant together and depositing them both on the support in such a way that the alkali metal phosphor is doped during the manufacture of the screen. Thus the invention encompasses a method for manufacturing a phosphor screen containing a CsX:Eu stimulable phosphor, wherein X represents a halide selected from the group consisting of Br and Cl comprising the steps of :

- bringing multiple containers of said CsX and an Europium compound selected from the group consisting of $EuX'_2$, $EuX'_3$ and EuOX', X' being a halide selected from the group consisting of F, Cl, Br and I in condition for vapour deposition and
- depositing, by a method selected from the group consisting of physical vapour deposition, thermal vapour deposition,, chemical vapour deposition, electron beam deposition, radio frequency deposition and pulsed laser deposition, both said CsX and said Europium compound on a substrate in such a ratio that on said substrate a CsX phosphor, doped with between $10^{-3}$ and 5 mol % of Europium, is formed.

The deposition can proceed from a single container containing a mixture of the starting compounds in the desired proportions. Thus the method encompasses further a method for manufacturing a phosphor screen containing a CsX:Eu stimulable phosphor, wherein X represents a halide selected from the group consisting of Br and Cl comprising the steps of :

- mixing said CsX with between $10^{-3}$ and 5 mol % of an Europium compound selected from the group consisting of $EuX'_2$, $EuX'_3$ and EuOX', X' being a halide selected from the group consisting of F, Cl, Br and I
- bringing said mixture in condition for vapour deposition and
- depositing said mixture on a substrate by a method selected from the group consisting of physical vapour deposition, thermal vapour deposition, chemical vapour deposition, electron beam deposition, radio frequency deposition and pulsed laser deposition.

Support materials useful for binderless storage screens having a phosphor layer with a crystal orientation as per this invention include cardboard, glass, plastic films such as films of cellulose acetate, polyvinyl chloride, polyvinyl acetate, polyacrylonitrile, polystyrene, polyester, polyethylene terephthalate, polyamide, polyimide, cellulose triacetate and polycarbonate; metal sheets such as aluminium foil and aluminium alloy foil; ordinary papers; baryta paper; resin-coated papers; pigment papers containing titanium dioxide or the like; and papers sized with polyvinyl alcohol or the like. A glass or Al-sheet or a thermostable plastic film is preferably employed as the support material.

When a glass support is used the support may comprise a coated layer with a light absorbing compound. This layer can be present on the back side (side where no phosphor is present) or may be present underneath the phosphor. The supports can also comprise subbing layers for having a better adhesion between the phosphor and the support.

The support, when it is a thermostable plastic film may contain a light-absorbing material such as carbon black, or may contain a light-reflecting material such as titanium dioxide or barium sulphate. The former is appropriate for preparing a high-resolution type storage screen, while the latter is appropriate for preparing a high-sensitivity type storage screen.

These supports may have a thickness which may differ depending on the material of the support, and may generally be between 60 μm and 1000 mm, more preferably between 80 μm and 500 mm from the standpoint of handling.

EXAMPLES

Preparation of the phosphor

CsBr:Eu screens were made via thermal vapour deposition of CsBr and EuOBr. To this aim, CsBr was mixed with EuOBr and placed in a container in a vacuum deposition chamber. The phosphor was deposited on a glass disk with a thickness of 1.5 mm and a diameter of 4.0 mm. The distance between the container and the substrate was 10 cm. During evaporation, the substrate was rotated at 12 rpm. The container with starting materials was heated to a temperature of 750oC.

Before the start of the evaporation, the chamber was evacuated to a pressure of $4.10^{-5}$ mbar. During the evaporation process, Ar was introduced in the chamber.

Variables in the deposition process were the substrate temperature and the Ar gas pressure. The different screens were produced under the conditions listed in Table 1. The Eu-concentration in the evaporated screens was measured with X-ray fluorescence and was of the order of 800 ppm.

Via Scanning Electron Microscopy (SEM), the morphology of the deposited phosphor layer was determined. All phosphor layers were made up of needle shaped crystals.

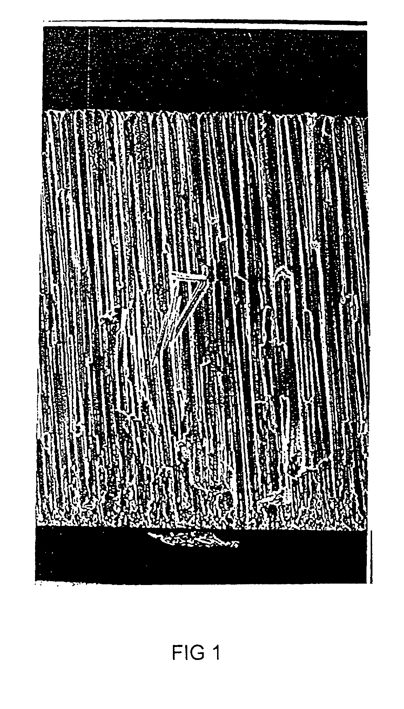

Figure 1 shows a SEM view of an example phosphor layer taken perpendicular on an edge of the phosphor layer. It is clear that a needle like structure is present.

Table 1:

| Substrate temperature and Ar gas pressure at the different screen depositions | | |
|---|---|---|
| **Screen** | **Substrate temperature (°C)** | **Ar pressure (Pa)** |
| Comparative example 1 | 130 | 3.2 |
| Invention Example 1 | 150 | 2.2 |
| Invention Example 2 | 150 | 1.1 |
| Invention Example 3 | 300 | 0 |
| Invention Example 4 | 92 | 2.4 |

Measurement of crystal orientation

The orientation of the crystal unit cell in the deposited needle shaped crystal has been determined through measurement of the XRD spectrum. XRD spectra have been measured with the commercially available diffractometer. The diffractometer was a Philips X'pert with a MPPS (Multiple Purpose Sampling Stage) and a Cu tube emitting a K$\alpha$-line of 0.154056 nm. The spectra were taken and analysed with the commercial software coming with the diffractometer. The settings and measurement parameters of the measurement were as follows (TEST A):

| Settings | 40 kV en 50 mA |
|---|---|
| | Incident beam : Divergence slit : fixed 1/8° |
| | Incident beam : Anti scatter slit : fixed 1/4° |
| | Incident beam : Fixed beam mask : 10mm |
| Measurement parameters | Start 2θ : 2.00° |
| | End 2θ : 80.00° |
| | Step size : 0.05° |
| | Time per step : 0.60s |
| | Secondary beam path : lower |
| | Scan axis : 2θ |
| | Scan mode : continuous |
| | Total time : 15min36s |
| | Gonio angle : 2.0° |
| | Spinning : no |

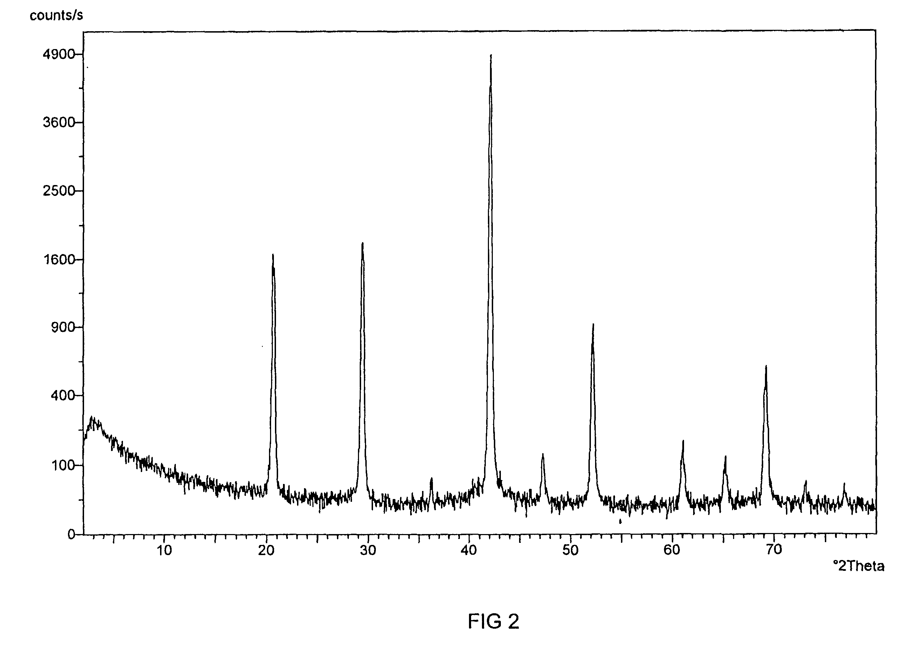

Figure 2 shows the XRD spectrum comparative example 1. A fairly strong [100] diffraction line is shown at 2θ of about 21° and an evenly strong [110] diffraction line is shown at 2θ of about 29°, also a strong [200] diffraction line is shown at 2θ of about 42°.

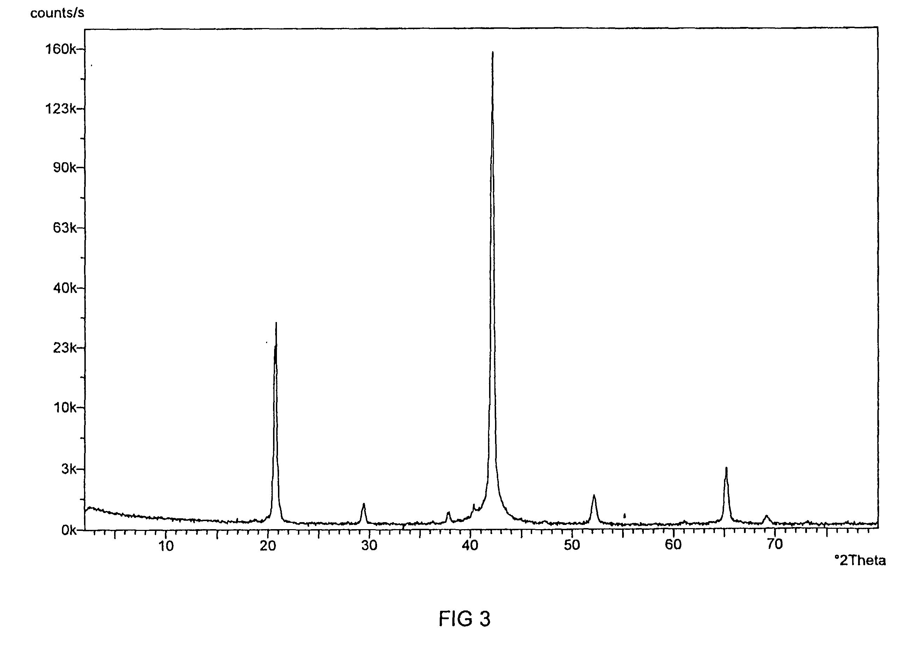

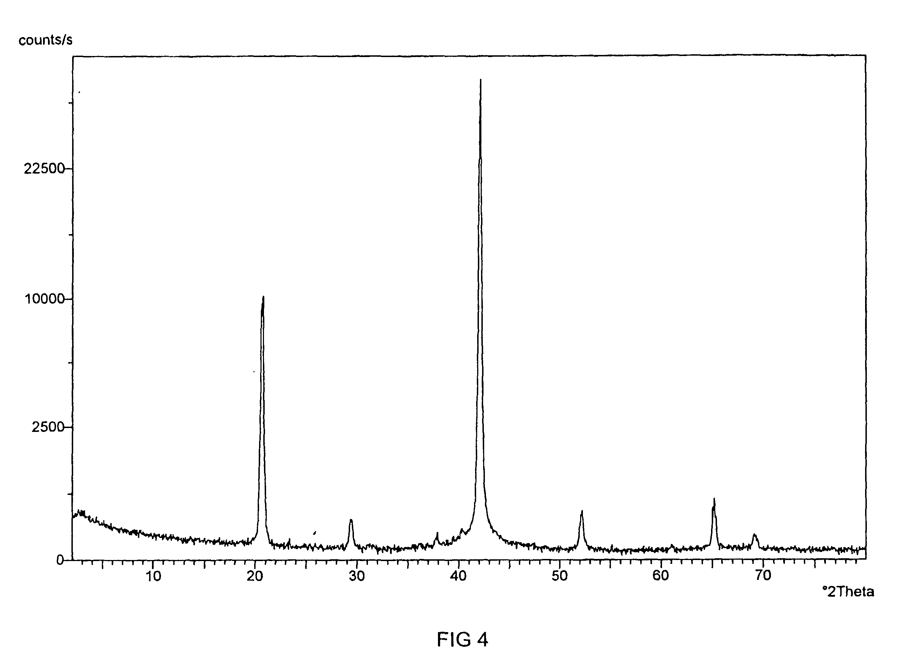

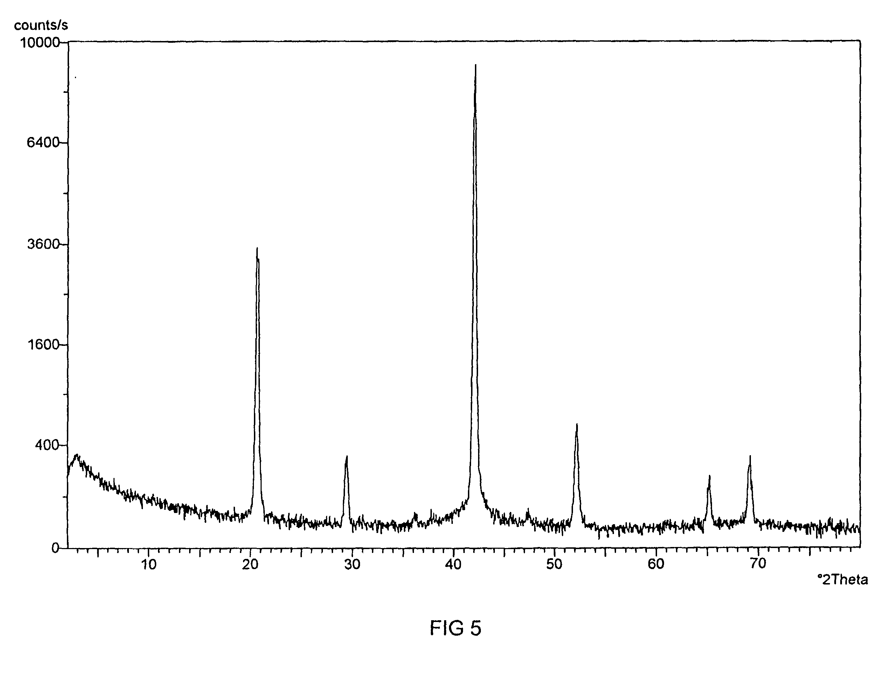

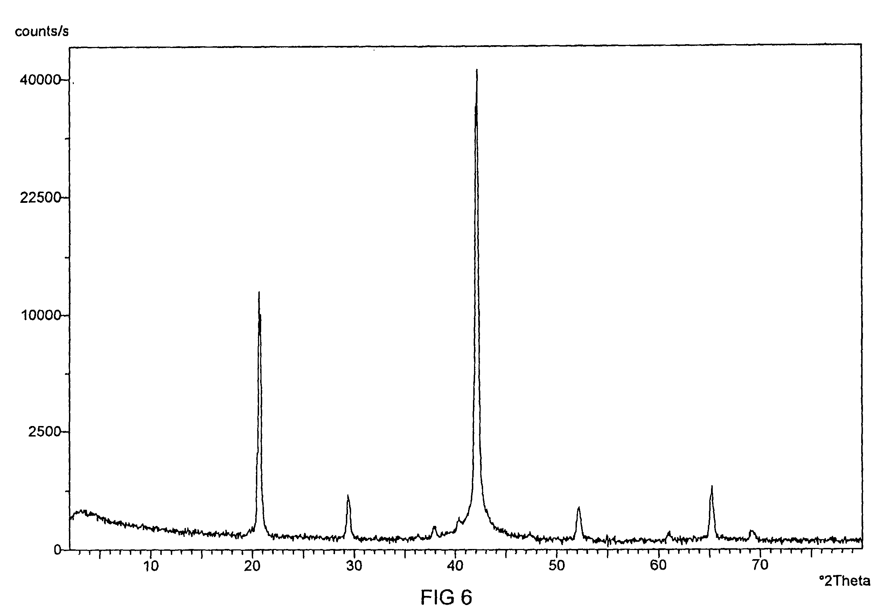

Figures 3 to 6 show the XRD-spectra of respectively invention example 1, 2, 3 and 4. In these spectra the [110] diffraction line at 2θ of about 29° is barely visible, while the [100] diffraction line at 2θ of about 21° and the [200] diffraction line at 2θ of about 42° remain very strong.

For each of the screens, the ratio between the intensity of the [100] peak in the XRD-spectrum and the [110] peak was calculated. The results are given in table 2

Table 2

| Screen | Ratio [100]/[110] |
|---|---|
| Comparative example 1 | 0.79 |
| Invention Example 1 | 54.71 |
| Invention Example 2 | 52.65 |
| Invention Example 3 | 12.16 |
| Invention Example 4 | 14.05 |

Sensitivity and sharpness measurements

In a first measurement the sensitivity (speed) of the phosphor screens, prepared under the conditions given in table 1 was measured.

The screens were homogeneously irradiated with a dose of ca. 50 mR at 80 kVp. Read out was done in a flying spot scanner. In the scanner, the scanning light source was a 30 mW diode laser emitting at 690 nm. A 4-mm BG-39 (trade name of Hoya) filter was used to separate the stimulation light from the screen emission light. The scan-average levels (SAL's) were determined as the average signal produced by the screens in the photomultiplier tube.

In a second measurement, the sharpness of the images, produced by the screens was measured. As a measure for the sharpness, the square wave response at 2 lp/mm was determined.

A grid with line pairs at spatial frequencies of 0.025 to 3 lp/mm was placed on top of the cassette, containing the screens. The grid was imaged at 80 kVp and 5 mA during 30". The screens were scanned with the flying spot scanner described above. The signal modulation was determined at 0.025 lp/mm and at 2 lp/mm. The SWR at 2 lp/mm was calculated as the ratio of the signal modulation at 2 lp/mm to the signal modulation at 0.025 lp/mm. The results of the measurements are listed in Table 3. Wherein the speed of the comparative example screen is arbitrary set to 100.

Table 3

| Screen | Speed (arbitrary units | SWR at 2 lp/mm |
|---|---|---|
| Comparative example 1 | 100 | 0.50 |
| Invention Example 1 | 186 | 0.56 |
| Invention Example 2 | 214 | 0.59 |
| Invention Example 3 | 102 | 0.66 |
| Invention Example 4 | 156 | 0.53 |

It can be concluded that the comparative example 1 screen with less developed (100) unit cell orientation, has inferior quality with respect to the invention examples 1 - 4 with almost perfect (100) unit cell orientation. It is possible to adjust the orientation of the crystal to chose a desired speed/sharpness compromise by using the temperature of the substrate during the vacuum deposition and the pressure of the inert gas as parameters.

## Claims

1. A binderless storage phosphor screen comprising an alkali metal storage phosphor **characterised in that** said screen shows an XRD-spectrum with a (100) diffraction line having an intensity $I_{100}$ and a (110) diffraction line having an intensity $I_{110}$, so that $I_{100}/I_{110} \geq 1$, when said XRD-spectrum is measured according to TEST A.

2. A binderless storage phosphor screen according to claim 1, wherein $I_{100}/I_{110} \geq 5$.

3. A binderless storage phosphor screen according to claim 1 or 2, wherein said phosphor is an alkali metal phosphor.

4. A binderless storage phosphor screen according to claim 1 or 2, wherein said phosphor is a CsX:Eu stimulable phosphor, wherein X represents a halide selected from the group consisting of Br and Cl is used, prepared by a method comprising the steps of :

- mixing said CsX with between $10^{-3}$ and 5 mol % of an Europium compound selected from the group consisting of $EuX'_2$, $EuX'_3$ and $EuOX'$, X' being a member selected from the group consisting of F, Cl, Br and I,
- firing said mixture at a temperature above 450 °C
- cooling said mixture and
- recovering the CsX:Eu phosphor.

5. A binderless storage phosphor screen according to any of claims 1 to 3, containing a CsX:Eu stimulable phosphor, wherein X represents a halide selected from the group consisting of Br and Cl wherein said screen is prepared by a method comprising the steps of :

- mixing said CsX with between $10^{-3}$ and 5 mol % of an Europium compound selected from the group consisting of $EuX'_2$, $EuX'_3$ and $EuOX'$, X' being a halide selected from the group consisting of F, Cl, Br and I
- bringing said mixture in condition for vapour deposition and
- depositing said mixture on a substrate by a method selected from the group consisting of physical vapour deposition, thermal vapour deposition,, chemical vapour deposition, electron beam deposition, radio frequency deposition and pulsed laser deposition.

6. Method for producing a binderless storage phosphor screen comprising the steps of :

- providing an alkali metal storage phosphor
- vacuum depositing said phosphor on a substrate **characterised in that** during said step of vacuum depositing said substrate is kept at a temperature T ≥ 90 °C and said vacuum deposition proceeds ion an Ar-atmosphere with an Ar-pressure of at most 3 Pa.

7. A method according to claim 6, wherein said Ar-pressure is kept between 0.20 and 2.00 Pa, both limits included and said temperature of said substrate is adjusted so as to have a product between temperature and Ar-pressure between 20 and 350, both limits included.

FIG 1

FIG 2

EP 1 158 540 A1

FIG 3

EP 1 158 540 A1

FIG 4

EP 1 158 540 A1

FIG 5

FIG 6

EP 1 158 540 A1

European Patent
Office

**EUROPEAN SEARCH REPORT**

Application Number

EP 00 20 1857

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 352 152 A (THOMSON CSF) 24 January 1990 (1990-01-24) * the whole document * | 1,3-5 | G21K4/00 C09K11/85 |
| A | FR 2 530 368 A (THOMSON CSF) 20 January 1984 (1984-01-20) * claims 1-8 * | 1,3-5 | |
| | | | **TECHNICAL FIELDS SEARCHED** (Int.Cl.7) G21K C09K |

The present search report has been drawn up for all claims

| Place of search | Date of completion of the search | Examiner |
|---|---|---|
| THE HAGUE | 16 October 2000 | Drouot-Onillon, M-C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 158 540 A1

ANNEX TO THE EUROPEAN SEARCH REPORT
ON EUROPEAN PATENT APPLICATION NO.

EP 00 20 1857

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2000

| Patent document cited in search report | | Publication date | Patent family member(s) | | Publication date |
|---|---|---|---|---|---|
| EP 0352152 | A | 24-01-1990 | FR | 2634562 A | 26-01-1990 |
| | | | DE | 68906478 D | 17-06-1993 |
| | | | DE | 68906478 T | 09-09-1993 |
| | | | JP | 2223129 A | 05-09-1990 |
| | | | US | 5449449 A | 12-09-1995 |
| | | | US | 4985633 A | 15-01-1991 |
| FR 2530368 | A | 20-01-1984 | NONE | | |

EPO FORM P0459

For more details about this annex : see Official Journal of the European Patent Office, No. 12/82

15